# EUROPÄISCHE PATENTSCHRIFT

(11) **EP 1 083 981 B1**
(45) Veröffentlichungstag und Bekanntmachung des Hinweises auf die Patenterteilung: **12.01.2005**
(21) Anmeldenummer: 99929029.9
(22) Anmeldetag: 27.04.1999
(51) Int. Cl.: B01D 71/10, B01D 69/12, B01D 61/14

(54) **KOMPOSITMEMBRAN AUS EINER MIKROPORÖSEN TRÄGERMEMBRAN UND TRENNSCHICHT AUS REGENERIERTER ZELLULOSE SOWIE EIN VERFAHREN ZU IHRER HERSTELLUNG**
COMPOSITE MEMBRANE MADE OF A MICROPOROUS SUPPORT MEMBRANE AND INTERLAYER MADE OF REGENERATED CELLULOSE AND METHOD FOR THE PRODUCTION OF THE SAME
MEMBRANE COMPOSITE CONSTITUEE D'UNE MEMBRANE SUPPORT MICROPOREUSE ET D'UNE COUCHE DE SEPARATION EN CELLULOSE REGENEREE, ET SON PROCEDE DE PRODUCTION

(30) Priorität: 13.05.1998 DE 19821309
(43) Veröffentlichungstag der Anmeldung: 21.03.2001
(73) Patentinhaber: GKSS-Forschungszentrum Geesthacht GmbH, 21502 Geesthacht (DE)
(72) Erfinder: PEINEMANN, Klaus-Viktor, D-21502 Geesthacht (DE); PEREIRA-NUNES, Suzana, D-21502 Geesthacht (DE); TIMMERMANN, Jens, D-37643 Negenborn (DE)
(74) Vertreter: Niedmers, Ole, Dipl.-Phys.
(86) Internationale Anmeldenummer: PCT/DE1999/001241
(87) Internationale Veröffentlichungsnummer: WO 1999/058232

(56) Entgegenhaltungen:
- EP-A- 0 418 432
- EP-A- 0 562 378
- US-A- 4 428 776
- US-A- 5 522 991
- DATABASE WPI Section Ch, Week 9425 Derwent Publications Ltd., London, GB; Class A11, AN 94-206444 XP002114793 & JP 06 145201 A (SHINETSU CHEM IND CO LTD), 24. Mai 1994 (1994-05-24)

## Beschreibung

Die Erfindung betrifft eine Kompositmembran aus einer mikroporösen Trägermembran und einer darauf aufgebrachten Trennschicht aus regenerierter Cellulose sowie ein Verfahren zu deren Herstellung und deren Verwendung.

Es sind bereits Cellulosemembranen bekannt, die durch Ausfällen von gelöster, chemisch modifizierter Cellulose und anschließende Regenerierung hergestellt werden. Zu den bekanntesten derartigen Verfahren zählen das sogenannte Viskose- und das Cuoxamverfahren. Beim Viskoseverfahren wird die Cellulose aus einer Cellulosexanthogenat-Lösung regeneriert. Bei diesem Cellulosexanthogenat handelt es sich um ein Reaktionsprodukt der Cellulose mit Schwefelkohlenstoff. Beim Cuoxamverfahren wird die Cellulose in ammoniakalischer Kupfersulfatlösung gelöst, anschließend ausgefällt und mit Säure regeneriert.

Die meisten Cellulosemembranen werden heutzutage durch Verseifen von asymmetrischen Celluloseacetatmembranen hergestellt. Eine derartige Vorgehensweise ist beispielsweise beschrieben in dem US-Patent 5 522 991. Dabei werden in der Regel stark alkalische Lösungen zur Anwendung gebracht.

Cellulose ist normalerweise hochkristallin und in den meisten üblichen Lösungsmitteln unlöslich. Nur wenige Lösungsmittel können Cellulose lösen, beispielsweise durch Komplexbildung. Zu diesen Lösungsmitteln zählen DMAC mit 5 - 8 % LiCl und DMSO/Paraformaldehyd oder besondere Kupfersalzlösungen.

Die Unlöslichkeit von Cellulose hat nun einerseits den Vorteil, daß sie als Membran Anwendung finden kann, wenn eine hohe chemische Beständigkeit erforderlich ist. Andererseits wird natürlich die Membranherstellung äußerst aufwendig, da keine geeigneten Lösungsmittel dafür zur Verfügung stehen. Diese Lösungsmittel sind zudem meist aggressiv und umweltschädlich.

Die Herstellung von Kompositmembranen mit dünnen und deshalb hochpermeablen, selektiven Schichten ist mit den bisher bekannten konventionellen Verfahren nicht möglich. Werden indirekte Verfahren zum Einsatz gebracht, bei denen beispielsweise Celluloseacetat als Ausgangsmaterial Anwendung finden, dann ist es erforderlich, stark alkalische und aggressive Herstellungsbedingungen zu wählen.

Ein weiterer Nachteil der meisten Cellulosemembranen ist ihr deutlicher Rückgang des Wasserflusses nach dem Trocknen.

Aufgabe der vorliegenden Erfindung ist es, eine Kompositmembran aus einer per se bekannten Trägermembran und einer darauf aufgebrachten, dünnen Cellulosetrennschicht sowie ein Verfahren zur Herstellung dieser Kompositmembran bereitzustellen.

Gelöst wird diese Aufgabe durch die Lehre der Ansprüche.

Für die erfindungsgemäße Kompositmembran wird eine Tri-(C₁-C₆)-alkylsilylcellulose eingesetzt. Unter einem -(C₁-C₆)-Alkylrest wird dabei ein gerader oder verzweigter Alkylrest mit 1 bis 6 Kohlenstoffatomen verstanden, beispielsweise ein Methyl-, Ethyl-, Propyl-, Butyl-, Pentyl- und Hexyl-Rest und auch die entsprechenden Iso-Reste, wie Isopropyl- und Isobutyl-Reste usw. Die Alkylreste können dabei gleich oder verschieden sein. Vorzugsweise wird dabei Trimethylsilylcellulose (TMSC) eingesetzt. Dieses Polymer (TMSC) selbst wird dabei hergestellt aus einer Celluloselösung in Dimethylacetamid mit LiCl. Die gelöste Cellulose reagiert mit Hexamethylsilazan nach einem bekannten Verfahren, das von W. Schempp, Th. Krause, U. Seifried und A. Koura in "Das Papier" 38, 607 (1984) beschrieben ist.

Die erfindungsgemäß eingesetzte Trialkylsilylcellulose und insbesondere das TMSC lösen sich in mehreren Lösungsmitteln, beispielsweise Kohlenwasserstofflösungsmitteln wie Hexan, Cyclohexan, Tetrahydrofuran und Isooctan. Zur Herstellung der erfindungsgemäßen Kompositmembran wird eine poröse Trägermembran bzw. ein poröser Träger mit einer verdünnten Trialkylsilylcelluloselösung und insbesondere mit einer TMSC-Lösung (mit normalerweise weniger als 3 % Polymer) durch "Dip Coating" beschichtet. Das Lösungsmittel wird dann bei Raumtemperatur oder mit heißer Luft abgedampft. Die trockene Membran wird in eine saure Lösung, insbesondere eine HCl-Lösung (etwa 1 molar), für ca. 5 min eingetaucht und danach mit Wasser gespült. Möglich ist auch eine alkoholische Hydrolyse. Dadurch werden die Silylgruppen an der Cellulosekette hydrolysiert. Es bildet sich eine Cellulosetrennschicht an der Membranoberfläche und somit auf der Trägermembran aus.

Bei der mikroporösen Trägermembran bzw. bei dem porösen Träger handelt es sich um eine per se bekannte Trägermembran, vorzugsweise aus Polyetherimid, Polysulfon, Polyvinylidenfluorid und Polyacrylonitril. Auch Copolymere aus den genannten Polymeren mit anderen Polymeren können zum Einsatz gebracht werden.

Die erfindungsgemäße Kompositmembran kann auf die beschriebene Weise mit einer sehr dünnen Cellulosetrennschicht ausgestattet werden, die vorzugsweise < 2 µm und insbesondere < 1 µm ist.

Für die Herstellung der erfindungsgemäßen Kompositmembran können somit harmlose organische Lösungsmittel zum Einsatz gebracht werden. Es ist im Gegensatz zum Stand der Technik nicht erforderlich, stark alkalische Lösung für die Verseifung einzusetzen.

Die erfindungsgemäße Kompositmembran kann zudem getrocknet werden, beispielsweise bei 50 bis 70° C insbesondere bei ca. 60° C, ohne daß ein wesentlicher Rückgang des Wasserflusses beobachtet wird.

Nach der Hydrolyse ist die Cellulosetrennschicht unlöslich in üblichen Lösungsmitteln. Die erfindungsgemäße Kompositmembran kann daher auch in organischen Lösungsmitteln eingesetzt werden.

Die Erfindung wird im folgenden anhand der Beispiele näher erläutert.

### Beispiel 1

Es wurden mehrere Membranen bei verschiedenen Bedingungen hergestellt. Dazu wurden drei verschiedene asymmetrische poröse Träger, die standardmäßig für die Herstellung von Kompositmembranen eingesetzt werden, verwendet. Es handelt sich dabei um Poly(etherimid)-(PEI), Poly(acrylonitril)- (PAN) und Poly(vinylidenfluorid)- (PVDF)träger. Diese Träger wurden in einer Tauchwanne mit einer Trimethylsilylcelluloselösung (TMSC-Lösung) beschichtet. Dabei wurden verschiedene Konzentrationen und Lösungsmittel verwendet, nämlich Hexan (Hex), Cyclohexan (Ch)/Toluol (Tol) und Tetrahydrofuran (THF).

Das Lösungsmittel wurde bei Raumtemperatur abgedampft. In Abhängigkeit von Konzentration der TMSC-Lösung ließen sich verschiedene Schichtdicken der trennaktiven Schicht und verschiedene Trenngrenzen der Kompositmembran einstellen.

Die trockenen Membranen wurden 15 min in eine 1 m HCl-Lösung getaucht. Dabei wurde die Beschichtung hydrolysiert und in Cellulose umgewandelt bzw. Cellulose wurde regeneriert.

Die Wasserpermeabilität der Membranen und ihre Poly(ethylenglycol) (PEG)-Rückhaltung wurden in einer "dead-end" Ultrafiltrationszelle gemessen. Dabei wurden folgende PEG-Lösungen mit folgenden Molekulargewichten als "Feed" eingesetzt: 40, 10, 6, 3 und 1,5 kg/mol.

Die Zusammensetzung von Permeat und Retentat wurde gelchromatographisch bestimmt. Die dabei erhaltenen Ergebnisse sind in der nachfolgenden Tabelle 1 aufgeführt. Das für die Membranherstellung verwendete Lösungsmittel Hexan als Lösungsmittel für die TMSC führt zu Membranen mit einem hohen Fluß und einer hohen Selektivität.

**Tabelle 1**

| Cellulosemembranen hergestellt aus Silylcelluloselösungen in verschiedenen Lösungsmitteln (LM) und verschiedenen Trägern (T). Lösungsmittel-Verdampfung bei Raumtemperatur | | | | | | | |
|---|---|---|---|---|---|---|---|
| Polymer % | LM/T | Wasser Fluß (l/h m2 bar) | PEG-Rückhaltung (%) | | | | |
| | | | 40 | 10 | 6 | 3 | 1,5 |
| | | | kg/mol | | | | |
| 1,3 | Hex/PEI | 49,2 | 98 | 95 | 79 | 59 | 40 |
| 2,0 | | 43,8 | 97 | 95 | 85 | 68 | 48 |
| 1,3 | Hex/PAN | 41,0 | 77 | 74 | 60 | 43 | 28 |
| 2,0 | | 29,3 | 92 | 83 | 67 | 48 | 32 |
| 2,0 | Hex/PVDF | 43,4 | 86 | 82 | 71 | 53 | 37 |
| 2,0 | THF/PVDF | 44,8 | 59 | 45 | 34 | 25 | 16 |
| 1,0 | Ch-Tol/PEI | 13,1 | 98 | 98 | 97 | 88 | 67 |

### Beispiel 2

Es wurden mehrere Membranen nach dem im Beispiel 1 beschriebenen Verfahren hergestellt. Allerdings wurde nach Beschichtung mit der Silylcelluloselösung sofort mit heißer Luft (ca. 80 bis 90° C) getrocknet.

Die dabei erhaltenen Ergebnisse sind in der Tabelle 2 dargestellt. Die Selektivität der so hergestellten erfindungsgemäßen Membranen ist deutlich erhöht im Vergleich zu den Membranen gemäß des Beispiels 1, man vergleiche die Werte in der Tabelle 1. Die Wasserflüsse sind leicht erniedrigt.

**Tabelle 2**

| Cellulosemembranen hergestellt aus Silylcelluloselösungen in verschiedenen Lösungsmitteln (LM) und verschiedenen Trägern (T). Lösungsmittel-Verdampfung mit heißer Luft | | | | | | | |
|---|---|---|---|---|---|---|---|
| Polymer % | LM/T | Wasser Fluß (l/h m2 bar) | PEG-Rückhaltung (%) | | | | |
| | | | 40 | 10 | 6 | 3 | 1,5 |
| | | | kg/mol | | | | |
| 2,0 | Hex/PEI | 21,1 | 99 | 99 | 97 | 90 | 61 |
| 1,3 | Hex/PAN | 31,4 | 98 | 96 | 88 | 69 | 45 |
| 2,0 | | 17,0 | 99 | 99 | 98 | 91 | 68 |
| 2,0 | Hex/PVDF | 16,5 | 99 | 98 | 97 | 90 | 69 |
| 1,0 | Ch-Tol/PEI | 17,6 | 98 | 96 | 96 | 87 | 62 |

### Beispiel 3

Für Vergleichszwecke wurden bekannte, kommerziell erhältliche Membranen bei den gleichen Bedingungen vermessen. Die Ergebnisse sind in der nachstehenden Tabelle 3 dargestellt.

**Tabelle 3**

| Kommerzielle Cellulosemembranen | | | | | | | |
|---|---|---|---|---|---|---|---|
| Membran | Hersteller | Wasser Fluß (l/h m2 bar) | PEG-Rückhaltung (%) | | | | |
| | | | 40 | 10 | 6 | 3 | 1,5 |
| | | | kg/mol | | | | |
| UF-C10 | Hoechst | 24,4 | 98 | 96 | 84 | 57 | 33 |
| PLCC | Millipore | 13,5 | 100 | 100 | 100 | 98 | 88 |
| PLGC | Millipore | 20,8 | 100 | 100 | 100 | 96 | 76 |
| Ultran RC5 | S & S* | 7,8 | 100 | 99 | 99 | 96 | 73 |
| Ultran RC10 | S & S* | 24,9 | 96 | 89 | 66 | 39 | 21 |

| | | | | | | | |
|---|---|---|---|---|---|---|---|
| * Schleicher & Schuell | | | | | | | |

### Beispiel 4

11 Membranen wurden wie im Beispiel 2 aus einer 1,6 % Silylcelluloselösung in Hexan auf PAN-Träger hergestellt. Nach der Hydrolyse wurden 3 Membranen bei Raumtemperatur getrocknet und wie vorher charakterisiert. 3 Membranen wurden vor der Trocknung in einer 20 % Glycerin/Wasser-Lösung für 5 min eingetaucht wie in Patent GB 1 349 394 für Cellulosemembranen vorgeschlagen. Die Ergebnisse sind in Tabelle 4 dargestellt. Auch ohne Vorbehandlung mit Glycerin wurde nach der Trocknung keine wesentliche Veränderung beobachtet. Im Vergleich zu kommerziellen Membranen bedeutet das einen großen Vorteil.

**Tabelle 4**

| Cellulosemembranen hergestellt aus 1.6 % Silylcelluloselösung in Hexan auf PAN-Träger | | | | | | |
|---|---|---|---|---|---|---|
| Vorbehandlung | Wasser Fluß (l/h m2 bar) | PEG-Rückhaltung (%) | | | | |
| | | 40 | 10 | 6 | 3 | 1,5 |
| | | kg/mol. | | | | |
| Naß | 26,4 | 100 | 99 | 93 | 75 | 49 |
| | 28,3 | 100 | 100 | 94 | 69 | 43 |
| | 27,0 | 100 | 99 | 90 | 71 | 46 |
| | 25,6 | 100 | 100 | 93 | 75 | 50 |
| | 29,5 | 100 | 99 | 90 | 70 | 45 |
| | | | | | | |
| Trocken ^{a} | 29,5 | 99 | 98 | 91 | 74 | 48 |
| | 25,1 | 99 | 99 | 95 | 83 | 58 |
| | 24,9 | 99 | 98 | 96 | 84 | 58 |
| | | | | | | |
| Trocken ^{b} | 30,0 | 99 | 97 | 87 | 68 | 45 |
| | 30,2 | 100 | 98 | 88 | 69 | 46 |
| | 29,2 | 99 | 98 | 90 | 71 | 46 |

| | | | | | | |
|---|---|---|---|---|---|---|
| ^{a} Trocknung bei Raumtemperatur | | | | | | |
| ^{b} Trocknung nach Behandlung mit Glycerin | | | | | | |

### Beispiel 5

Membranen wurden wie im Beispiel 2 aus einer 1,6 % Silylcellulose-Lösung in Hexan auf PAN-Träger hergestellt. Ihre Beständigkeit in sauren und alkalischen Lösungen und auch in Hexan wurde untersucht. Für diesen Zweck wurden Membranen ca. 6 Tage bei pH 1 und 13 und auch in Hexan und Isopropanol gelagert. Die Ergebnisse sind in den Tabellen 5 - 7 dargestellt und zeigen die hohe Beständigkeit der Membranen. Hexan ist ein gutes Lösungsmittel für Silylcellulose. Die hohe Beständigkeit der Membran beweist auch, daß die Hydrolyse vollständig ist.

**Tabelle 5**

| Beständigkeit in pH 1: Cellulosemembranen hergestellt aus 1,6 % Silylcelluloselösung in Hexan auf PAN-Träger. Kontaktzeit 6 Tage | | | | | | |
|---|---|---|---|---|---|---|
| | Wasser Fluß (l/h m2 bar) | PEG-Rückhaltung (%) | | | | |
| | | 40 | 10 | 6 | 3 | 1,5 |
| | | kg/mol | | | | |
| Vorher | 26,4 | 100 | 99 | 93 | 75 | 49 |
| | 29,2 | 100 | 100 | 94 | 69 | 43 |
| | 28,1 | 100 | 99 | 90 | 71 | 47 |
| | | | | | | |
| Nachher | 27,4 | 99 | 98 | 90 | 73 | 48 |
| | 29,0 | 100 | 99 | 90 | 71 | 46 |
| | 27,8 | 100 | 98 | 89 | 71 | 47 |

**Tabelle 6**

| Beständigkeit in pH 13: Cellulosemembranen hergestellt aus 1,6 % Silylcelluloselösung in Hexan auf PAN-Träger. Kontaktzeit 6 Tage | | | | | | |
|---|---|---|---|---|---|---|
| | Wasser Fluß (l/h m2 bar) | PEG-Rückhaltung (%) | | | | |
| | | 40 | 10 | 6 | 3 | 1,5 |
| | | kg/mol | | | | |
| Vorher | 26,6 | 100 | 100 | 93 | 75 | 50 |
| | 29,5 | 100 | 99 | 90 | 70 | 45 |
| | 30,8 | 100 | 100 | 89 | 70 | 45 |
| | | | | | | |
| Nachher | 24,7 | 99 | 98 | 89 | 71 | 47 |
| | 30,5 | 99 | 97 | 85 | 66 | 43 |
| | 28,5 | 99 | 96 | 84 | 65 | 43 |

**Tabelle 7**

| Beständigkeit in Hexan: Cellulosemembranen hergestellt aus 1,6 % Silylcelluloselösung in Hexan auf PAN-Träger | | | | | | |
|---|---|---|---|---|---|---|
| Wasser Fluß (l/h m2 bar) | | PEG-Rückhaltung (%) | | | | |
| | | 40 | 10 | 6 | 3 | 1,5 |
| | | kg/mol | | | | |
| Vorher | 31,9 | 97 | 94 | 83 | 64 | 42 |
| | 25,2 | 99 | 99 | 93 | 78 | 53 |
| | 24,7 | 99 | 99 | 82 | 76 | 51 |
| | | | | | | |
| Nachher | 28,8 | 97 | 94 | 84 | 66 | 45 |
| | 23,1 | 100 | 100 | 95 | 74 | 54 |
| | 22,3 | 99 | 98 | 93 | 78 | 53 |

**Tabelle 8**

| Beständigkeit in Isopropanol: Cellulosemembranen hergestellt aus 1,6 % Silylcelluloselösung in Hexan auf PAN-Träger | | | | | | |
|---|---|---|---|---|---|---|
| | Wasser Fluß (l/h m2 bar) | PEG-Rückhaltung (%) | | | | |
| | | 40 | 10 | 6 | 3 | 1,5 |
| | | kg/mol | | | | |
| Vorher | 34,4 | 100 | 97 | 85 | 62 | 38 |
| | 34,4 | 99 | 96 | 85 | 62 | 37 |
| | 35,1 | 99 | 95 | 83 | 61 | 38 |
| | 30,0 | 99 | 97 | 89 | 67 | 42 |
| | | | | | | |
| Nachher | 36,9 | 99 | 96 | 84 | 60 | 37 |
| | 34,7 | 99 | 95 | 83 | 59 | 35 |
| | 35,8 | 98 | 95 | 82 | 60 | 37 |
| | 32,2 | 98 | 96 | 85 | 62 | 37 |

## Patentansprüche

1. Kompositmembran aus einer mikroporösen Trägermembran und einer darauf aufgebrachten Trennschicht aus regenerierter Cellulose, dadurch erhältlich, daß eine Tri-(C₁-C₆)-alkylsilylcellulose in einem Lösungsmittel gelöst auf die Trägermembran aufgebracht, das Lösungsmittel abgedampft und die Tri-(C₁-C₆)-alkylsilylcellulose durch Hydrolyse in regenerierte Cellulose überführt wird.

2. Kompositmembran nach Anspruch 2, **dadurch gekennzeichnet, daß** es sich bei der Tri-(C₁-C₆)-alkylsilylcellulose um Trimethylsilylcellulose handelt.

3. Kompositmembran nach Anspruch 1 oder 2, **dadurch gekennzeichnet, daß** der Substitutionsgrad der Tri-(C₁-C₆)-alkylsilylcellulose 2,5 bis 3 beträgt.

4. Kompositmembran nach einem der vorhergehenden Ansprüche, **dadurch gekennzeichnet, daß** es sich bei der mikroporösen Trägermembran um eine per se bekannte Trägermembran auf Basis von Polyetherimid, Polysulfon, Polyvinylidenfluorid und/oder Polyacrylonitril sowie gegebenenfalls zusätzlich eines weiteren Copolymers oder mehrerer Copolymere handelt.

5. Verfahren zur Herstellung einer Kompositmembran aus einer mikroporösen Trägermembran und eine darauf aufgebrachten Trennschicht aus regenerierter Cellulose, **dadurch gekennzeichnet, daß** eine Tri-(C₁-C₆)-alkylsilylcellulose in einem Lösungsmittel gelöst auf die Trägermembran aufgebracht, das Lösungsmittel abgedampft und die Tri-(C₁-C₆)-alkylsilylcellulose durch Hydrolyse in regenerierte Cellulose überführt wird.

6. Verfahren nach Anspruch 5; **dadurch gekennzeichnet, daß** eine saure Hydrolyse durchgeführt wird.

7. Verfahren nach Anspruch 5 oder 6, **dadurch gekennzeichnet, daß** Trimethylsilylcellulose als Tri-(C₁-C₆)-alkylsilylcellulose eingesetzt wird.

8. Verfahren nach einem der Ansprüche 5 bis 7, **dadurch gekennzeichnet, daß** eine Tri-(C₁-C₆)-alkylsilylcellulose mit einem Substitutionsgrad von 2,5 bis 3 eingesetzt wird.

9. Verfahren nach einem der Ansprüche 5 bis 8, **dadurch gekennzeichnet, daß** die Membran insbesondere bei 50 bis 70 °C getrocknet wird.

10. Verfahren nach einem der Ansprüche 5 bis 9, **dadurch gekennzeichnet, daß** als Lösungsmittel ein Kohlenwasserstoff, ein Kohlenwasserstoffgemisch oder ein kohlenwasserstoffhaltiges Lösungsmittelgemisch eingesetzt wird.

11. Verwendung einer Kompositmembran nach einem der Ansprüche 1 bis 4 für die Ultra- und Nanofiltration oder für die Abtrennung von Wasserdampf aus gasförmigen Gemischen.

## Claims

1. Composite membrane made from a microporous support membrane and a separation layer of regenerated cellulose applied thereon, obtainable by applying to the support membrane a tri-(C₁-C₆)-alkylsilyl cellulose dissolved in a solvent, evaporating the solvent and converting the tri-(C₁-C₆)-alkylsilyl cellulose into regenerated cellulose by hydrolysis.

2. Composite membrane according to Claim 2, **characterized in that** the tri-(C₁-C₆)-alkylsilyl cellulose involves trimethylsilyl cellulose.

3. Composite membrane according to Claim 1 or 2, **characterized in that** the degree of substitution of the tri-(C₁-C₆)-alkylsilyl cellulose is 2.5 to 3.

4. Composite membrane according to one of the foregoing Claims, **characterized in that** the microporous support membrane involves a support membrane that is in itself known, based on polyetherimide, polysulphone, polyvinylidene fluoride and/or polyacrylonitrile, optionally together with a further copolymer or several copolymers in addition.

5. Method for manufacturing a composite membrane made from a microporous support membrane and a separation layer of regenerated cellulose applied thereon, **characterized in that** a tri-(C₁-C₆)-alkylsilyl cellulose dissolved in a solvent is applied to the support membrane, the solvent is evaporated off and the tri-(C₁-C₆)-alkylsilyl cellulose is converted into regenerated cellulose by hydrolysis.

6. Method according to Claim 5, **characterized in that** an acid hydrolysis is carried out.

7. Method according to Claim 5 or 6, **characterized in that** trimethylsilyl cellulose is used as tri-(C₁-C₆)-alkylsilyl cellulose.

8. Method according to one of the Claims 5 to 7, **characterized in that** a tri-(C₁-C₆)-alkylsilyl cellulose with a degree of substitution of 2.5 to 3 is used.

9. Method according to one of the Claims 5 to 8, **characterized in that** the membrane is dried particularly at 50 to 70°C.

10. Method according to one of the Claims 5 to 9, **characterized in that** a hydrocarbon, a hydrocarbon mixture or a solvent mixture containing hydrocarbon is used as the solvent.

11. Use of a composite membrane according to one of the Claims 1 to 4 for ultra-filtration and nano-filtration or to separate water vapour from gaseous mixtures.

## Revendications

1. Membrane composite constituée par une membrane support microporeuse et une couche de séparation en cellulose régénérée appliquée sur celle-ci, pouvant être obtenue en ce qu'on applique sur la membrane support une tri-(alkyle en C₁ à C₆)silylcellulose dissoute dans un solvant, on évapore le solvant et on transforme la tri-(alkyle en C₁ à C₆)silylcellulose par hydrolyse en cellulose régénérée.

2. Membrane composite selon la revendication 2, **caractérisée en ce qu'**il s'agit, pour la tri(alkyle en C₁ à C₆)silylcellulose, de triméthylsilylcellulose.

3. Membrane composite selon la revendication 1 ou 2, **caractérisée en ce que** le degré de substitution de la tri(alkyle en C₁ à C₆)silylcellulose est de 2,5 à 3.

4. Membrane composite selon l'une quelconque des revendications précédentes, **caractérisée en ce qu'**il s'agit, pour la membrane support microporeuse, d'une membrane support connue en soi à base de polyétherimide, de polysulfone, de poly(fluorure de vinylidène) et/ou de polyacrylonitrile ainsi que le cas échéant d'un autre copolymère ou de plusieurs copolymères.

5. Procédé pour la fabrication d'une membrane composite constituée par une membrane support microporeuse et une couche de séparation en cellulose régénérée appliquée sur celle-ci, **caractérisé en ce qu'**on applique sur la membrane support une tri(alkyle en C₁ à C₆)silylcellulose dissoute dans un solvant, on évapore le solvant et on transforme la tri(alkyle en C₁ à C₆)silylcellulose par hydrolyse en cellulose régénérée.

6. Procédé selon la revendication 5, **caractérisé en ce qu'**on réalise une hydrolyse acide.

7. Procédé selon la revendication 5 ou 6, **caractérisé en ce qu'**on utilise, comme tri(alkyle en C₁ à C₆)silylcellulose, la triméthylsilylcellulose.

8. Procédé selon l'une quelconque des revendications 5 à 7, **caractérisé en ce qu'**on utilise une tri(alkyle en C₁ à C₆)silylcellulose présentant un degré de substitution de 2,5 à 3.

9. Procédé selon l'une quelconque des revendications 5 à 8, **caractérisé en ce que** la membrane est en particulier séchée à 50 jusqu'à 70°C.

10. Procédé selon l'une quelconque des revendications 5 à 9, **caractérisé en ce qu'**on utilise comme solvant un hydrocarbure, un mélange d'hydrocarbures ou un mélange de solvants contenant un ou des hydrocarbures.

11. Utilisation d'une membrane composite selon l'une quelconque des revendications 1 à 4 pour l'ultrafiltration et la nanofiltration ou pour la séparation de vapeur d'eau de mélanges gazeux.
